# EUROPÄISCHE PATENTSCHRIFT

(11) **EP 0 634 377 B1**
(45) Veröffentlichungstag und Bekanntmachung des Hinweises auf die Patenterteilung: **07.02.1996**
(21) Anmeldenummer: 94110961.3
(22) Anmeldetag: 14.07.1994
(51) Int. Cl.: C04B 28/34, E04B 1/80

(54) **Verfahren zur Herstellung von Formkörpern mit wärmedämmenden Eigenschaften**
Method of producing shaped bodies with heat insulating properties
Procédé de fabrication de corps façonnés ayant des propriétés thermo-isolantes

(30) Priorität: 15.07.1993 DE 4323778
(43) Veröffentlichungstag der Anmeldung: 18.01.1995
(73) Patentinhaber: Wacker-Chemie GmbH, D-81737 München (DE)
(72) Erfinder: Katzer, Hans, Dr., D-87471 Durach (DE); Kratel, Günter, Dr., D-87471 Durach (DE); Biller, Beate, Dr., D-87437 Kempten (DE)

(56) Entgegenhaltungen:
- EP-A- 0 148 280
- DE-B- 1 129 413
- FR-A- 2 336 357
- US-A- 4 726 974
- Chemical Abstracts, vol. 92, No. 12, 24. März 1980, Columbus, Ohio, US; abstract No. 98605y, Y. Fukuda et al. "Silicate foaming composition" seite 278
- DATABASE WPI Section Ch, Week 8723, 30. Mai 1985, Derwent Publications Ltd., London, GB; Class L02, AN85-167830 and JP-A-60 096 562 (Kikusui Kagaku Kogyo KK) 30. Mai 1985

## Beschreibung

Die Erfindung betrifft ein Verfahren zur Herstellung von Formkörpern mit wärmedämmenden Eigenschaften auf der Basis geschäumter Alkalisilikat-Teilchen, die Siliciumdioxid (SiO₂) und Alkalimetalloxid (M₂O) (M für Alkalimetall) in einem Molverhältnis von 2 bis 4,5 (SiO₂:M₂O) enthalten. Ferner betrifft die Erfindung die Verwendung der nach dem Verfahren hergestellten Formkörper.

In der japanischen Offenlegungsschrift JP-49069755 ist ein Verfahren zur Herstellung von Formkörpern auf der Basis von geschäumten Alkalisilikat-Teilchen beschrieben. In einem ersten Verfahrensschritt wird Granulat von wasserhaltigem Natriumsilikat erhitzt und dabei geschäumt. Die geschäumten Teilchen werden anschließend mit Wasser oder einer wässerigen Natriumsilikat-Lösung besprüht, in eine Form gefüllt und zu Formkörpern gebrannt.

In der deutschen Patentschrift DE-3246619 werden schäum- und härtbare Formmassen aus SiO₂, weiteren Oxiden, Wasser und Schäummitteln, wie Perborat, und Verfahren zu deren Herstellung beschrieben. Gemäß der deutschen Auslegeschrift DE-2537492 werden Silikatschaumperlen mit Wasserglas, einer die Erhärtung des Wasserglases steuernden, saueren Verbindung, wie Natriumsilikofluorid oder Phosphorsäure und einem Hydrophobierungsmittel, wie Polyethylhydrosiloxan vermischt und zu Formkörpern verfestigt. Ferner ist es aus CA, 92 (1980) Nr. 12, 98605g bekannt, aus einer Mischung von geblähtem Wasserglasgranulat und CaHPO₄·2H₂O Wärmedämmformkörper hergestellen.

Nachteilig an den Formkörpern auf der Basis geschäumter Alkalisilikat-Teilchen, die nach den bekannten Verfahren hergestellt werden, ist deren mangelnde Formstabilität bei hoher Luftfeuchtigkeit. Sie verlieren insbesondere bei höheren Temperaturen und hoher Luftfeuchtigkeit ihre ursprüngliche Festigkeit. Dies führt dazu, daß unter solchen Bedingungen nach einer längeren Lagerung die Bindung zwischen geschäumten Alkalisilikat-Teilchen zum größten Teil verloren geht.

Die Aufgabe der Erfindung bestand deshalb darin, ein Verfahren zu entwickeln, mit dessen Hilfe Formkörper hergestellt werden können, die die genannten Nachteile nicht aufweisen.

Gelöst wird die Aufgabe durch ein Verfahren zur Herstellung von Formkörpern mit wärmedämmenden Eigenschaften auf der Basis geschäumter Alkalisilikat-Teilchen, die Siliciumdioxid (SiO₂) und Alkalimetalloxid (M₂O) (M für Alkalimetall) in einem Molverhältnis von 2 bis 4,5 (SiO₂:M₂O) enthalten, dadurch gekennzeichnet, daß
a) 100 Gewichtsteile der aufgeschäumten Alkalisilikat-Teilchen mit einer wässerigen Lösung von Monoaluminiumphosphat (Al(H₂PO₄)₃) gemischt werden, so daß das Molverhältnis Si:Al in der Mischung einen Wert von 1 bis 60 annimmt;
b) die Mischung in eine vorgewählte Form eingefüllt und auf 20 bis 80% des ursprünglichen Volumens zu einem Formkörper verdichtet wird;
c) der Formkörper auf eine Temperatur von 100 bis 500 °C erhitzt wird, bis eine chemische Reaktionsbindung zwischen den Alkalisilikat-Teilchen und dem Monoaluminiumphosphat erfolgt ist.

Die Basis der erfindungsgemäßen Formkörper bilden geschäumte Alkalisilikat-Teilchen. Zu ihrer Herstellung wird in an sich bekannter Weise eine Mischung von Alkalisilikaten zubereitet, die SiO₂ und M₂O (M für Alkalimetall) in einem Molverhältnis von 2,0 bis 4,5, vorzugsweise 3,5 bis 3,9 enthält. Zu solchen Mischungen gelangt man beispielsweise durch Vermischen einer wässerigen Natrium- oder Kaliumsilikatlösung (Wasserglas) mit amorpher Kieselsäure. Die Herkunft der Kieselsäure ist von untergeordneter Bedeutung. Es können sowohl Fällungskieselsäuren als auch pyrogen erzeugte Kieselsäuren oder auch natürliche Silikate mit hohem SiO₂-Anteil verwendet werden. Der Zusatz weiterer Stoffe, wie Wasserglas härtender, sauer reagierender Verbindungen und/oder siliciumorganischer Verbindungen ist möglich, aber nicht zwingend vorgeschrieben. Die Herstellung der geschäumten Alkalisilikat-Teilchen geschieht durch eine Temperaturbehandlung der Mischung bei Temperaturen von 100 bis 500 °C. Wird die Mischung als Granulat mit einem heißen Luftstrom oder einer heißen Fläche in Kontakt gebracht, entstehen annähernd kugelförmige, poröse Alkalisilikat-Teilchen.

Zur Herstellung der erfindungsgemäßen Formkörper werden bevorzugt geschäumte Alkalisilikat-Teilchen mit Durchmessern von 0,1 bis 20 mm, besonders bevorzugt 2 bis 6 mm verwendet. Die eingesetzten Teilchen haben ferner eine Schüttdichte von 10 bis 150 g/l, vorzugsweise 30 bis 50 g/l, eine Druckfestigkeit bei 50 %iger Stauchung von 0,1 bis 3 N/mm², vorzugsweise 0,8 bis 1,2 N/mm², einen mittleren Porendurchmesser von 50 bis 1000 µm, vorzugsweise 150 bis 200 µm und eine BET-Oberfläche von 0,01 bis 5 m²/g, vorzugsweise 0,5 bis 1 m²/g.

Wässerige Aufschlämmungen der beschriebenen, geschäumten Alkalisilikat-Teilchen reagieren stark alkalisch. Werden 2 g der Alkalisilikat-Teilchen gemahlen, in 50 ml Wasser suspendiert und 30 Minuten auf Siedetemperatur gehalten, so liegt der mit einer Glaselektrode meßbare pH-Wert der abgekühlten Aufschlämmung im Bereich von pH 10,0 bis 11,5 Auch nach der Zugabe einer der Erfindung entsprechenden Menge an sauer reagierender Monoaluminiumphosphat-Lösung zur Aufschlämmung wird nach dem 30 minütigen Erhitzen noch ein pH-Wert im Bereich von pH 9,0 bis 10,5 festgestellt.

Aus der Literatur ist bekannt, daß Monoaluminiumphosphat als Bindemittel von silikatischem Material in alkalischer Umgebung nicht geeignet ist (T.Chvatal in Sprechsaal 108 (1975), S. 585). Es war deshalb überraschend, zu finden, daß die oben beschriebenen Alkalisilikat-Teilchen zu stabilen Formkörpern gebrannt werden können, wenn sie zuvor in der erfindungsgemäßen Weise mit einer wässerigen Lösung durchmischt und weiterbehandelt werden. Besonders überraschend ist die Tatsache, daß die so hergestellten Formkörper hinsichtlich ihrer Form- und Festigkeitsstabilität denen des Stands der Technik deutlich überlegen sind.

Die Durchmischung der Alkalisilikat-Teilchen mit der wässerigen Monoaluminiumphosphat-Lösung geschieht vorzugsweise so, daß die Lösung auf die bewegten Teilchen aufgesprüht wird und die Teilchen dabei homogen durchfeuchtet werden. Die Menge an Monoaluminiumphosphat in der wässerigen Lösung wird mit der Menge der Alkalisilikat-Teilchen so abgestimmt, daß das Molverhältnis Si:Al in der Mischung einen Wert von 1 bis 60, vorzugsweise von 12 bis 20 annimmt. Besonders bevorzugt werden wässerige Lösungen mit einem Gehalt an Monoaluminiumphosphat von 5 bis 60 Gew.-% eingesetzt.

In der wässerigen Monoaluminiumphosphat-Lösung kann ein Trübungsmittel bis zu einem Gehalt von 30 Gewichtsteilen (bezogen auf 100 Gewichtsteile der eingesetzten Menge an Alkalisilikat-Teilchen) suspendiert sein. Als Trübungsmittel werden anorganische Oxide, Mischoxide, Carbide, Nitride oder Kohlenstoff verwendet. Bevorzugt sind Ilmenit, die Oxide von Titan, Eisen, Chrom und Zirkon, sowie Siliciumcarbid, Ruß und Mischungen der genannten Stoffe.

Nach dem Mischen der geschäumten Alkalisilikat-Teilchen mit der Monoaluminiumphosphat-Lösung wird die Mischung in eine Form gefüllt und in der Form auf 20 bis 80% des ursprünglichen Volumens zu Formkörpern verpreßt. Beim Verpressen sollen die in der Mischung eingeschlossenen Gase durch die Form entweichen können. Es werden vorzugsweise Formen verwendet, mit deren Hilfe Platten, Profile oder Rohre abgeformt werden können. Darüber hinaus sind selbstverständlich auch Formen zur Herstellung von Formkörpern mit komplizierterer Gestalt einsetzbar.

Dem Formgebungsschritt folgt eine Temperaturbehandlung des Formkörpers bei 100 bis 500 °C. Obwohl es nicht zwingend vorgeschrieben ist, werden der Formkörper und die Form zunächst voneinander getrennt und nur der Formkörper der Temperaturbehandlung unterworfen. Wenn der beim Erhitzen entstehende Wasserdampf entweichen kann, ist die Wärmebehandlung auch in der Form durchführbar. Je nach Geometrie und Volumen des Formkörpers wird dieser vorzugsweise für einen Zeitraum von 10 Minuten bis 4 Stunden auf eine Temperatur im angegebenen Bereich, mindestens jedoch auf eine solche, bei der die chemische Reaktionsbindung zwischen den Alkalisilikat-Teilchen und dem Monoaluminiumphosphat erfolgt, erhitzt.

Die Wärmeübertragung kann durch Konvektion, Wärmestrahlung, Wärmeleitung oder Mikrowellenbestrahlung erfolgen. Die Reaktionsbindung läßt sich durch Infrarotspektroskopie verfolgen und nachweisen. Die Wärmebehandlung kann im Chargenbetrieb (diskontinuierlich), im Taktbetrieb (teilkontinuierlich) oder im Bandbetrieb (kontinuierlich) durchgeführt werden.

Die Dichten der Formkörper betragen nach der Temperaturbehandlung 0,050 bis 0,2 g/cm³, vorzugsweise 0,070 bis 0,1 g/cm³.

Die erfindungsgemäß hergestellten Formkörper weisen in Abhängigkeit ihrer jeweiligen Dichte Wärmeleitfähigkeiten im Bereich von 0,030 bis 0,1 W/mK bei 23 °C auf und eignen sich deshalb besonders als wärmedämmendes Material. Aufgrund ihrer Festigkeit können sie problemlos durch Sägen, Schleifen, Schneiden, Feilen oder Bohren mechanisch bearbeitet werden. Der besondere Vorteil der Formkörper liegt in ihrer hervorragenden Form- und Festigkeitsstabilität in einer Umgebung mit hoher Luftfeuchtigkeit. Sie besitzen im feuchten Zustand nach einer 48-stündigen Lagerung in einem Klimaschrank bei 50 °C und 95 % relativer Luftfeuchtigkeit noch eine Druckfestigkeit nach Deutscher Industrie Norm DIN 53421 im Bereich von 0,01 bis 0,1 N/mm² und die Biegefestigkeit nach DIN 53452 im Bereich von 0,01 bis 0,1 N/mm².

Mit entsprechenden Klebern, z.B. Wasserglas oder organischen Kontaktklebern kann die Oberfläche der Formkörper mit Papier oder Folien, beispielsweise Kraftpapier, Aluminiumfolie, Gipskartonplatten, Blech, verstärkte Kunststoffolie oder Glasfasergewebe beklebt werden. Ebenso lassen sich die Formkörper mit geschlossenen Überzügen versehen, beispielsweise durch Tauchen in oder Besprühen mit Lösungen organischer Kunststoffe oder vernetzender Siliconharze. Schließlich können die Wärmedämmformkörper auch in gasdichte Umhüllungen gepackt werden, wobei zur Erhöhung der wärmedämmenden Eigenschaften der Druck innerhalb der Umhüllung niedriger als der Atmosphärendruck, vorzugsweise niedriger als 10 mbar ist.

Die erfindungsgemäßen Formkörper werden vorzugsweise als Wärmedämmstoffe im Bausektor, zum Beispiel zur Flachdach- oder Fassadendämmung oder beim Innenausbau als abgehängte Decken oder Zwischenwände verwendet, da sie nicht brennbar sind, beim Erhitzen keine schädlichen Gase abgeben und auch keine gesundheitsgefährdenden, anorganischen Fasern enthalten. Darüber hinaus sind die Formkörper auch als Wärmedämmstoffe in der Kältetechnik und in der Heizungstechnik bis Temperaturen um 400 °C einzusetzen. Eine weitere Verwendung der Formkörper betrifft schließlich ihre Verwendung bei der Schalldämmung.

Nachfolgend wird an Hand eines Beispiels und eines Vergleichsbeispiels die überlegene Formstabilität des erfindungsgemäßen Formkörpers demonstriert:

### Beispiel:

60 g geschäumte Natriumsilikat-Teilchen mit einem Molverhältnis SiO₂ : Na₂O von 3,67, einem Teilchendurchmesser von ca. 3 mm, einer Schüttdichte von 37 g/l, einer Druckfestigkeit bei 50%iger Stauchung von 1,0 N/mm², einem Porendurchmesser von ca. 180 µm und einer BET-Oberfläche von 0,9 m²/g wurden mit 36 g einer 50 %igen (Gew.-%) wäßrigen Al(H₂PO₄)₃-Lösung (FFB 32i, Fa. CHEMETALL GmbH, Frankfurt) gemischt und durchfeuchtet, so daß das Molverhältnis Si : Al in der Mischung einen Wert von 13,9 annahm. Die Mischung wurde in eine quadratische Form mit 200 mm Seitenlänge gefüllt und soweit verdichtet, daß eine Platte mit 20 mm Höhe entstand. Diese Platte wurde 1 Stunde auf 300 °C erhitzt, wobei sich das IR-Spektrum der Substanz veränderte. Der Formkörper wies nach dem Abkühlen eine Dichte von 0,104 g/cm³, eine Druckfestigkeit nach DIN 53 421 von 0,14 N/mm², eine Biegefestigkeit nach DIN 53 452 von 0,10 N/mm² und eine Wärmeleitzahl von 0,0457 W/mK auf (gemessen mit einem HESTO-Lambda-CONTROL A50 Gerät der Fa. HESTO, Langen).

Nach 48-stündiger Lagerung in einem Klimaschrank bei 50 °C und 95 % relativer Luftfeuchtigkeit besaß die feuchte Platte noch eine Druckfestigkeit von 0,03 N/mm² und eine Biegefestigkeit von ca. 0,03 N/mm².

### Vergleichsbeispiel:

60 g der in Beispiel 1 genannten geschäumten Natriumsilikat-Teilchen wurden anstatt mit Al(H₂PO₄)₃-Lösung mit 36 g Wasser besprüht und wie oben beschrieben weiter verarbeitet.

Nach 48-stündiger Lagerung bei 50 °C und 95 % relativer Luftfeuchtigkeit konnte die Platte dem Klimaschrank nicht mehr unversehrt entnommen werden. Die Messung der Druck- und Biegefestigkeit war nicht mehr möglich.

## Patentansprüche

1. Verfahren zur Herstellung von Formkörpern mit wärmedämmenden Eigenschaften auf der Basis geschäumter Alkalisilikat-Teilchen, die Siliciumdioxid (SiO₂) und Alkalimetalloxid (M₂O) (M für Alkalimetall) in einem Molverhältnis von 2 bis 4,5 (SiO₂:M₂O) enthalten, dadurch gekennzeichnet, daß
a) 100 Gewichtsteile der aufgeschäumten Alkalisilikat-Teilchen mit einer wässerigen Lösung von Monoaluminiumphosphat (Al(H₂PO₄)₃) gemischt werden, so daß das Molverhältnis Si:Al in der Mischung einen Wert von 1 bis 60 annimmt;
b) die Mischung in eine vorgewählte Form eingefüllt und auf 20 bis 80% des ursprünglichen Volumens zu einem Formkörper verdichtet wird;
c) der Formkörper auf eine Temperatur von 100 bis 500 °C erhitzt wird, bis eine chemische Reaktionsbindung zwischen den Alkalisilikat-Teilchen und dem Monoaluminiumphosphat erfolgt ist.

2. Verfahren nach Anspruch 1, dadurch gekennzeichnet, daß der Gehalt an Monoaluminiumphosphat in der wässerigen Lösung 5 bis 60 Gew.-% beträgt.

3. Verfahren nach einem der Ansprüche 1 oder 2, dadurch gekennzeichnet, daß vor dem Mischen gemäß Schritt a) des Verfahrens 0 bis 30 Gewichtsteile (bezogen auf die Menge der Alkalisilikat-Teilchen) eines anorganischen Trübungsmittels in der wässerigen Monoaluminiumphosphat-Lösung suspendiert werden.

4. Verfahren nach einem der Ansprüche 1 bis 3, dadurch gekennzeichnet, daß im Schritt a) des Verfahrens die wässerige Monoaluminiumphosphat-Lösung auf die Alkalisilikat-Teilchen gesprüht wird.

5. Verfahren nach einem der Ansprüche 1 bis 4, dadurch gekennzeichnet, daß im Schritt b) des Verfahrens Formen zur Abformung von Platten, Profilen oder Rohren gewählt werden.

6. Verfahren nach einem der Ansprüche 1 bis 5, dadurch gekennzeichnet, daß der Formkörper mechanisch bearbeitet, mit Papier oder Folien beklebt, mit einem geschlossenen Überzug versehen, oder in eine gasdichte, evakuierte Umhüllung gepackt wird.

7. Verwendung der in einem Verfahren nach einem der Ansprüche 1 bis 6 hergestellten Formkörper zur Wärmedämmung.

8. Verwendung der in einem Verfahren nach einem der Ansprüche 1 bis 6 hergestellten Formkörper zur Schalldämmung.

## Claims

1. Process for producing shaped bodies having thermally insulating properties and based on foamed alkali metal silicate particles comprising silicon dioxide (SiO₂) and alkali metal oxide (M₂O) (M is an alkali metal) in a molar ratio of from 2 to 4.5 (SiO₂:M₂O), characterized in that
a) 100 parts by weight of the foamed alkali metal silicate particles are mixed with an aqueous solution of monoaluminium phosphate (Al(H₂PO₄)₃) in such a way that the molar ratio Si:Al in the mixture assumes a value of from 1 to 60;
b) the mixture is placed in a preselected mould and the mixture is compacted to from 20 to 80% of the original volume to give a shaped body;
c) the shaped body is heated to a temperature of from 100 to 500°C until a chemical reaction bond between the alkali metal silicate particles and the monoaluminium phosphate has taken place.

2. Process according to Claim 1, characterized in that the monoaluminium phosphate content of the aqueous solution is from 5 to 60% by weight.

3. Process according to one of Claims 1 or 2, characterized in that, prior to mixing in accordance with step a) of the process, from 0 to 30 parts by weight (based on the amount of the alkali metal silicate particles) of an inorganic opacifier are suspended in the aqueous monoaluminium phosphate solution.

4. Process according to any one of Claims 1 to 3, characterized in that, in step a) of the process, the aqueous monoaluminium phosphate solution is sprayed onto the alkali metal silicate particles.

5. Process according to any one of Claims 1 to 4, characterized in that, in step b) of the process, the moulds selected are ones for moulding plates, profiles or pipes.

6. Process according to any one of Claims 1 to 5, characterized in that the shaped body is mechanically processed, has paper or films adhesively bonded to it, is provided with a closed coating, or is packed in a gastight, evacuated covering.

7. Shaped body produced in a process according to any one of Claims 1 to 6 used for thermal insulation.

8. Shaped body produced in a process according to any one of Claims 1 to 6 used for sound insulation.

## Revendications

1. Procédé de fabrication de corps façonnés ayant des propriétés thermoisolantes à base de particules de silicate alcalin moussées, qui contiennent du dioxyde de silicium (SiO₂) et un oxyde de métal alcalin (M₂O) (M pour métal alcalin) dans un rapport molaire de 2 à 4,5 (SiO₂:M₂O), caractérisé en ce que
a) 100 parties en poids des particules de silicate alcalin moussées sont mélangées avec une solution aqueuse de phosphate de monoaluminium (Al(H₂PO₄)₃), de sorte que le rapport molaire Si:Al dans le mélange prend une valeur de 1 à 60;
b) le mélange est placé dans une forme préalablement choisie et est comprimé de 20 à 80% du volume initial en un corps façonné;
c) le corps façonné est chauffé à une température de 100 à 500°C, jusqu'à ce qu'une fixation par réaction chimique se produise entre les particules de silicate alcalin et le phosphate de monoaluminium.

2. Procédé suivant la revendication 1, caractérisé en ce que la teneur en le phosphate de monoaluminium dans la solution aqueuse atteint 5 à 60% en poids.

3. Procédé suivant l'une quelconque des revendications 1 ou 2, caractérisé en ce que, avant le mélange suivant l'étape a) du procédé, on met en suspension dans la solution aqueuse du phosphate de monoaluminium, de 0 à 30 parties en poids (sur base de la quantité de particules de silicate alcalin) d'un agent de turbidité inorganique.

4. Procédé suivant l'une quelconque des revendications 1 à 3, caractérisé en ce que, à l'étape a) du procédé, la solution aqueuse du phosphate de monoaluminium est vaporisée sur les particules de silicate alcalin.

5. Procédé suivant l'une quelconque des revendications 1 à 4, caractérisé en ce que, à l'étape b) du procédé, les formes sont choisies pour obtenir des plaques, profils ou tubes.

6. Procédé suivant l'une quelconque des revendications 1 à 5, caractérisé en ce que les corps façonnés sont travaillés mécaniquement, collés avec du papier ou des feuilles métalliques, munis d'un enduit hermétique ou emballés dans une enveloppe étanche aux gaz, dans laquelle on a fait le vide.

7. Utilisation du corps façonné préparé par un procédé suivant l'une quelconque des revendications 1 à 6, pour un isolement thermique.

8. Utilisation du corps façonné préparé par un procédé suivant l'une quelconque des revendications 1 à 6, pour un isolement acoustique.
